# EUROPEAN PATENT APPLICATION

(11) **EP 1 993 145 A2**
(43) Date of publication of application: **19.11.2008**
(21) Application number: 08008807.3
(22) Date of filing: 12.05.2008
(51) Int. Cl.: H01L 31/058

(54) **Solar energy collection panel for rooftop and similar installations**

(30) Priority: 17.05.2007 IT TO20070348
(71) Applicant: Sillano, Massimo, 10025 Pino Torinese (TO) (IT)
(72) Inventor: Sillano, Massimo, 10025 Pino Torinese (TO) (IT)
(74) Representative: Aprà, Mario

(57) **Abstract**

The solar energy collection panel for rooftops and the like according to the invention includes at least one solar collector (23) and at least one photovoltaic module collector 25) operationally combined in order to receive solar energy simultaneously, totally, partially, or in alternation.

## Description

This invention relates to a solar energy collection panel for rooftops and the like.

Solar energy collection panels are commonly known and can be essentially divided into two classes: 1) solar thermal collectors and 2) photovoltaic module collectors.

A solar collector is a device designed for the collection of thermal solar energy and the storage of the same for subsequent use. It is usually composed of an absorber designed to receive solar energy, a heat exchanger, a fluid utilized to absorb solar energy, and a tank for the storage of the energy accumulated. This system can have natural or forced circulation.

Solar collectors can be used to either provide hot water and heating or to generate electricity.

Although solar collectors can provide hot water and heating in good quantity, they are unable to substitute usual heating methods completely due to the inconstancy of sunlight.

Heating requires ample space for the installation of solar collectors, as well as the presence of constant sunshine.

A photovoltaic module is a device that is capable of converting solar energy directly into electricity by means of the photovoltaic effect, and it is used to generate electricity from sunlight. Photovoltaic modules can be mechanically pre-assembled so as to form a photovoltaic module collector.

The performance of photovoltaic modules varies significantly on the basis of the materials output, the manufacturer's tolerance percentage compared to the rating plate values, the degree of radiation to which the modules are exposed, the inclination at which the sunlight strikes the surface, the operating temperature of the materials, which tend to undergo fatigue in hot weather conditions, and the spectral composition of the light.

The most common photovoltaic modules in crystalline silicon have dimensions that vary from 0.5 to 1.5 sq m, and even reach 2.5 sq m in large systems. There is no special reason to build modules of large size due to the significant decrease in performance that the entire module undergoes when in the shade, or due to the malfunction of even only one of its modules.

Starting from the technical and economic advantages and drawbacks of solar collectors and photovoltaic module collectors, the present invention is intended to provide a solar energy collection panel for rooftops and the like, with optimized operation and thermal output in terms of both water heating and production of electricity in accumulation and distribution systems for domestic and industrial use.

Another aim of the present invention is to provide a solar collection panel for rooftops and the like, that is simple in structure, safe and reliable to use, and easy to install and operate.

In light of these aims, the invention provides a solar energy collection panel for rooftops and the like, with the essential characteristics described in Claim 1.

Further advantageous characteristics are described in the dependent claims.

The aforesaid claims and dependent claims are those described herein.

The invention will be described in greater detail below with reference to the following drawings enclosed, which are provided for the purpose of illustration only without posing limits of any kind:
- Fig. 1 provides an elevation view with a section view of parts of a solar energy collection panel for rooftops and the like, according to an initial illustrating embodiment of the invention in which a solar collector and a photovoltaic module collector are depicted in staggered configuration;
- Fig. 2 is a cross-sectional view along Line 11-II in Fig. 1;
- Fig. 3 shows a view similar to that of Fig. 1 but with the solar collector and the photovoltaic module collector depicted in reciprocal overlap;
- Figures 4 and 5 are cross-sectional views respectively along Lines IV-IV and V-V in Fig. 3:
- Fig. 6 is similar to Fig. 1, but shows a second embodiment of the solar energy collection panel according to the present invention, in which a solar collector and a photovoltaic module collector are depicted in a staggered configuration;
- Fig. 7 shows a view similar to that of Fig. 6 but with the solar collector and the photovoltaic module solar collector depicted in reciprocal overlap;
- Fig. 8 is a partial cross-sectional view in higher scale along the line VIII-VIII of Fig. 7,
- Fig. 9 is a partial cross-sectional view in higher scale along the line IX-IX of Fig. 7.

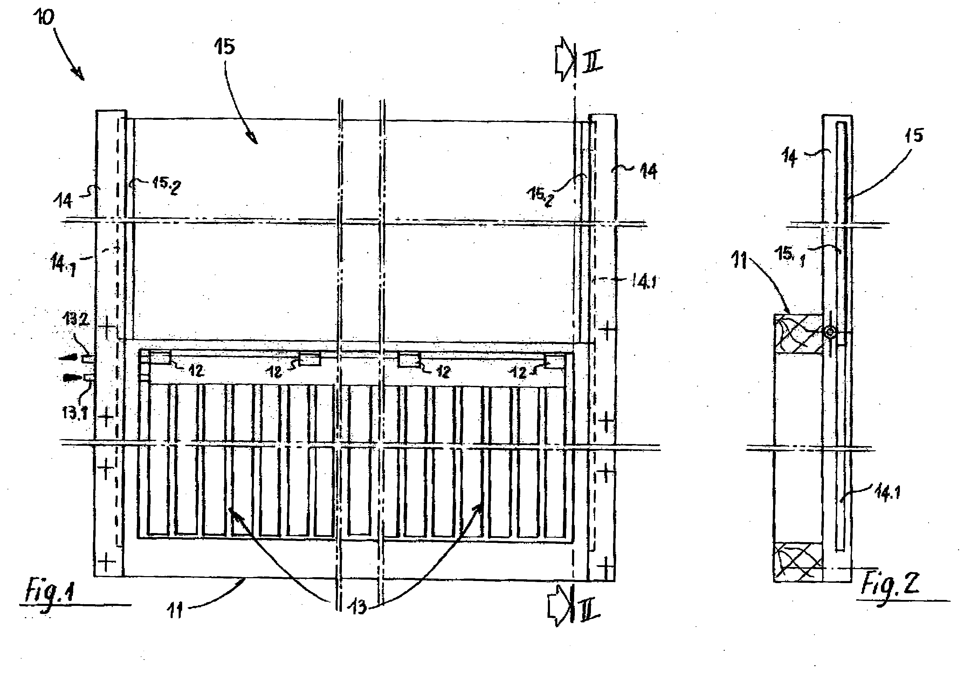

### First embodiment (Figures 1 - 5)

Number 10 indicates in its entirety a solar energy collection panel for rooftops and the like, according to this first example.

Such panel 10 includes a flat rectangular frame 11, in wood or plastic reinforced by fibreglass, of relatively large size, extended, for this purpose of example, over a flat approx. 6 sq m surface area. Such frame 11 is destined to be fastened to the rooftop of a building or similar structure, and will therefore be referred to below as a "fixed frame".

A solar collector 13 with vacuum tubes already known in itself and herein only depicted and no further illustrated or described is solidly housed and installed by brackets 12 inside such fixed frame 11. The solar collector 13 can be mounted on pitched roofs in either longitudinal (with its tubes practically at right angle to the roof's ridge) or transversal direction (with its tubes practically parallel to the roof's ridge). Such solar collector 13 with vacuum tubes is constructed according to the so-called "heat-pipe" principle, and is equipped for the production of hot water, building heating water, and swimming pool heating water by means of a heat exchanger and also for the production of process heat.

Numbers 13.1 and 13.2 indicate respectively such solar collector's heat absorption fluid delivery and return tubes with reference to said collector 13. Such solar collector 13 is also provided with a temperature limitation device for protection against overheating that automatically interrupts operation whenever the absorption fluid exceeds a preset temperature threshold.

Such solar collector 13 is available, for example, in 2.5 sg m modules with 25 tubes. Numerous collectors can be interconnected in order to obtain a max. 6 sq m surface area for thermal exchange using sealed flexible connection hoses thermally insulated using aerogel.

Furthermore, such frame 11 supports on its upper free face, that is at the surface thereof distal from the roof to which it is fixed, two fixed rectilinear guides 14 in parallel alignment that extend in parallel to the median vertical transversal plane of the collection panel 10. Such guides 14, in metal, for example, overlap on the transversal sides of the frame 11 and protrude beyond the frame itself on one side only, such as, for example, towards the ridge of the roof on which the panel 10 is installed.

Each guide 14 has a groove 14.1 that is extended for a substantial part of its length. The two grooves 14.1 face each other and are identically symmetrical in regard to the median vertical transversal plane of the collection panel 10.

A photovoltaic module collector 15 is mounted on a stiff support bench 15.1 that moves along the guides 14 by means of two lateral fixed rectilinear racks 15.2 respectively engaged with sliding motion inside the grooves 14.1 of the guides 14. This bench 15.1 is, for example, composed of a flat plate (with appropriate ribbing) in plastic reinforced by fibreglass on whose external face an arrangement of photovoltaic modules that forms the collector 15 is applied and appropriately wired (a device which is commonly known and not shown).

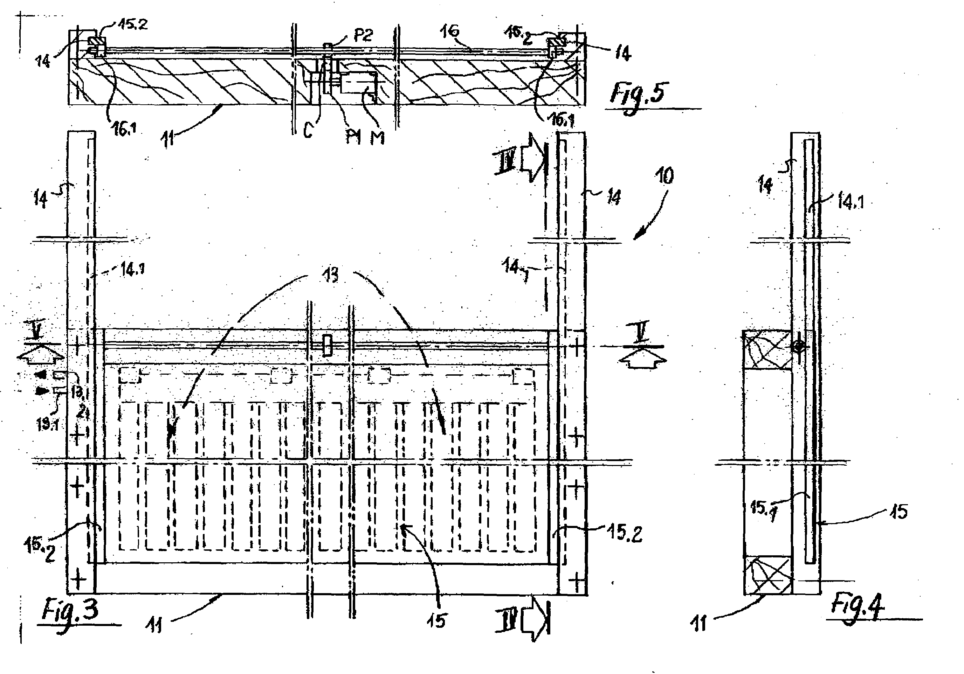

A reversible electric gearmotor M (Fig. 5) is mounted in central position inside the solar collection panel 10 (near the ridge of the roof, for example) with an output shaft that lies substantially at right angle to such median vertical transversal plane.

A driven shaft 16 is provided with rotating support on the frame 11 substantially in the plane of the guides 14, and is driven by the above-mentioned gearmotor M by means of a system of pulleys, a drive pulley P1 and a driven pulley P2 with C drive belts in between. The driven shaft 16 lies parallel to the axis of the above-mentioned output shaft of the qearmotor M, and the driven shaft 16 extends with both its ends into the corresponding cavities in the support bench 15.1 (without contact). The respective toothed pinions 16.1 are keyed onto the areas near such ends of the driven shaft 16. These pinions enmesh in the corresponding lateral rectilinear racks 15.2 of the photovoltaic module collector 15 support bench 15.1.

Two stroke-end microswitches (devices commonly known and not shown) are provided at the ends of one of the two grooves and are electrically connected in conventional manner in the motor M electric circuit in order to interrupt operation when such command is given by the collector 15.

An electric control panel (commonly known and not shown) controls the rotation of the motor M in the desired direction and therefore the advance and return movement for the positioning of the photovoltaic module solar collector 15 in respect to the guides 14 on the frame 11 that houses the solar collector 13 for:
- an advanced position, towards the roof's ridge, for example (Fig. 1) in which such photovoltaic module solar collector 15 is completely staggered with regard to solar collector 13, which can therefore receive solar radiation on all its surface area, and
- a returned position in regard to the above-mentioned ridge of the roof (Fig. 3), in which such photovoltaic module solar collector 15 completely covers the solar collector 13 with the support bench 15.1 in order to provide a protective shield. The overlap of the photovoltaic module collector 15 over the solar collector 13 can also be partial when required.

In this way, it is possible to optimize the operation of the solar energy collection panel 10 by keeping the photovoltaic module collector 15 always exposed to solar radiation, for example, and exposing the solar collector 13 only when the sunlight is sufficient to ensure optimum operation. In this way, the production of electricity (permanent, by means of the collector 15) can be combined with the production of hot water (at time intervals using the collector 13) in accordance with weather conditions with the use of the solar energy collection panel 10 that occupies on site an area substantially equivalent to that of the solar collector 13 alone.

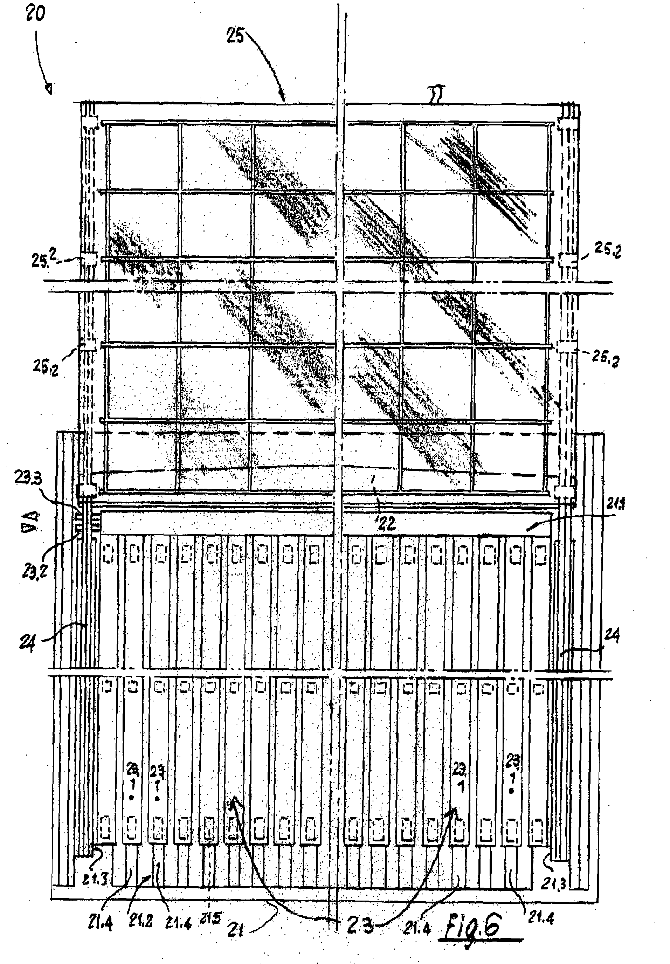

### Second embodiment Figures 6 - 9)

Number 20 indicates, as a whole, the solar energy collection panel for rooftops and the like, according to this further example.

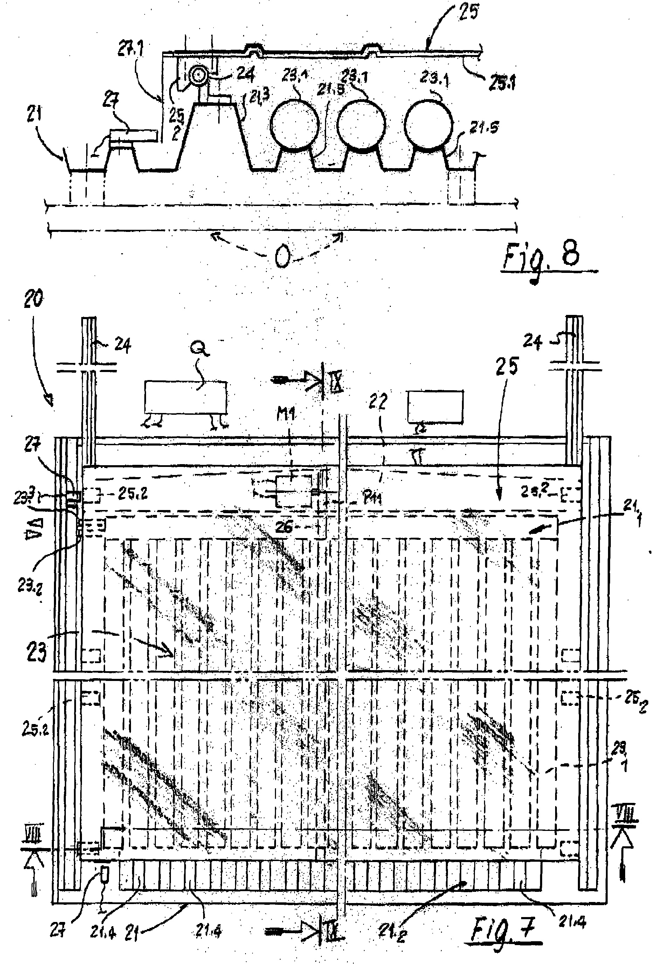

Such panel 20 includes a corrugated support plate 21, in plastic reinforced by fibreglass, for example, of relatively large size. Such corrugated support plate 21 is Fastened directly to the support structure of a rooftop or similar construction, such as the roof's "O" scaffolding for example (fig. 8) in order to provide cover for the roof itself. The corrugations in such plate 21 are arranged, for example, according to the inclination of the slope of the roof that it covers.

Such corrugated support plate 21 has, with reference to one longitudinal end of the corrugations, a transversal cavity 21.1, called as the upper cavity that extends transversally through the corrugations themselves in essentially rectangular plan and is positioned near the ridge of the roof. With reference to the other longitudinal end of the corrugations, such corrugated support plate 21 has another cavity 21.2 with a substantially rectangular plan called as the lower cavity. The upper cavity 21.1 and the lower cavity 21.2 form collection basins for the rainwater channelled by gutters (not shown).

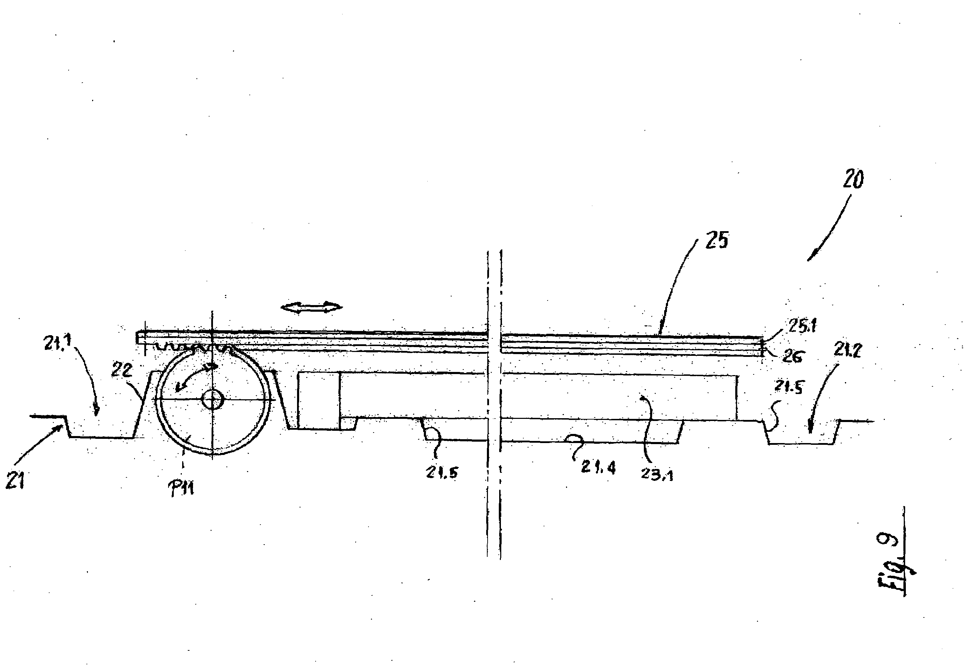

The two lateral corrugations at the end 21.3 (Fig. 8) are more pronounced than the intermediate corrugations 21.4, each of which supports a fixed vacuum tube 23.1 of a vacuum tube solar collector 23 of the type described for the first embodiment (to be consulted if necessary) . Such tubes 23.1, rest on their respective support blocks 21.5 with respect to such intermediate corrugations 21.4 (fig. 9).

Numbers 23.2 and 23.3 indicate respectively the heat absorption fluid delivery and return tubes of such solar collector 23.

The two lateral corrugations at the end 21.3 of such plate 21 support, each on its upper free face, a respective fixed rectilinear guide 24 (Fig. 8), such as metal tubing for example. Such guides 24 are parallel and extend in parallel to the median vertical transversal plane of the corrugated plate 21 (coinciding with section Line IX-IX in Fig. 7). Such guides 24 also protrude beyond such plate 21 on one side only, such as, for example, in the direction of the ridge of the roof that the corrugated plate 21 covers.

A photovoltaic module collector 25 is fastened to a stiff support bench 25.1 with mobile mounting with respect to such guides 24 by means of fixed blocks 25.2 engaged with sliding motion inside the guides 24 themselves. This bench 25. 1 is, for example, composed of a flat plate (with appropriate ribbing) in plastic reinforced by fibreglass on whose external face the series of photovoltaic modules that make up the collector 25 is applied and appropriately wired (such configuration is known in itself and not shown).

An integral, heightened hollow underframe 22 is formed upstream from the upper cavity 21.1 in the plate 21 in essentially pentagonal plan with the apex facing the pitch of the roof for rainwater drainage.

A reversible electric gearmotor M1 (Fig. 7) is mounted in central position inside such underframe 22 whose output shaft lies at a right angle to the median vertical transversal plane of the corrugated plate 21. A pinion P11 (Fig. 9) is keyed into such output shaft near the median plane.

The lower face of the support bench 25.1 mounts a rectilinear rack 26 that extends in the direction of such median vertical plane and is enmeshed in such pinion P11.

Stroke-end limit switches 27 (Figures 7, 8) are provided along one of the two rectilinear guides 24 and electrically connected in a electric circuit with the motor M1 in such way as to stop operation whenever commanded by a drive organ 27.1 protruding from the support bench 25.1 of the collector 25.

An electric control panel Q (Fig. 7) permits the control of the rotation of the motor M1 in the desired direction and therefore the advance and return movement and consequently the respective positioning of the photovoltaic module collector 25 with respect to the fixed guides 24 on the plate 21 that supports the solar collector 23 for:
- an advanced position, towards the ridge of the roof, for example (fig. 6), in which such photovoltaic module solar collector 25 is completely staggered with regard to the solar collector 23 and can therefore receive sunlight on its entire surface, and
- a retreated position, in regard to the roof's ridge, for example (fig. 7), in which such photovoltaic module solar collector 25 with the support bench 25.1 completely covers such solar collector 23 in the form of a protective shield. The overlap of the photovoltaic module solar collector 25 over the solar collector 23 can also be partial whenever required.

In this case as well, the operation of the solar energy collection panel 20 can be optimized, for example, by always keeping the photovoltaic module solar collector 25 exposed to the sunlight and exposing the solar collector 23 only when sunlight is sufficient to ensure optimum operation, and with reduced overall dimensions as well.

Another advantage worthy of note offered by the corrugated plate 21 that supports the solar energy collection system with two collectors - the solar collector 23 and the photovoltaic module solar collector 25 - is represented by the fact that it also represents a form of cover means of the rooftop on which the panel 20 is installed.

As is evident from the above, the solar energy collection panel for rooftop and similar installations, according to the invention, permits the achievement of the aims presented in the preamble simply and efficaciously.

For the optimum operational control of the panel according to the invention, the respective electric circuit includes electric/electronic means that include a rain gauge, an anemometer, and a luminous intensity meter, or in other words, a so-called twilight sensor, that permit the exposure of the solar collector only under the optimum conditions of solar radiation, otherwise providing to the total or partial covering of the solar collector itself by the photovoltaic module collector.

## Claims

1. Solar energy collection panel for rooftops and the like, **characterized in that** it comprises at least one solar collector (13, 23) and at least one photovoltaic module collector (15, 25) operationally combined in order to receive solar energy simultaneously, totally, partially, or in alternation.

2. Solar energy collection panel, according to Claim 1, **characterized in that** it comprises at least one solar collector (13, 23) and at least one photovoltaic module collector (15, 25) and control means (M, P1, P2, C, 14, 14.1, 15. 2, 16, 16.1, M1, P11, 24, 25.2, 26) to selectively arrange said at least one solar collector (13, 23) and said at least one photovoltaic module collector (15, 25) in reciprocal total or partial overlap or reciprocal distancing in order to permit the total or partial exposure to sunlight of all said collectors or at least one of the same.

3. Solar energy collection panel, according to Claim 1 and/or 2 **characterized in that** it comprises at least one photovoltaic module collector (15, 25) in sliding arrangement with respect to at least one solar collector (13, 23).

4. Solar energy collection panel, according to one or more of the preceding claims, **characterized in that** it comprises said at least one photovoltaic module collector (15, 25) in sliding arrangement on guides (14, 14.1, 24, 25.2) with respect to said at least one solar collector (13, 23).

5. Solar energy collection panel, according to one or more of the preceding claims, **characterized by** the fact that said guides (14, 14.1, 24, 25.2) are fixed in respect to a support structure (11, 21) of said at least one solar collector (13, 23).

6. Solar energy collection panel, according to one or more of the preceding claims, **characterized by** the fact that said at least one solar collector (13, 23) includes a support structure (11, 21) bearing motorized means (M, M1) that selectively control the relative mobility of said at least one photovoltaic module collector (15, 25).

7. Solar energy collection panel, according to the preceding claim, **characterized in that** it comprises mechanical means of movement transmission (P1, P2, C, 14, 14.1, 15.2, 16, 16.1, P11, 24, 25.2, 26) inserted between said motorized means (M, M1) and said at least one mobile collector (15, 25).

8. Solar energy collection panel, according to one or more of the preceding claims, **characterized in that** it comprises a support frame (11) for at least one solar collector (13, 23) bearing motorized means (M) that selectively controls the relative mobility of at least one photovoltaic module collector (15).

9. Solar energy collection panel, according to one or more of the preceding claims, **characterized in that** it comprises a support plate (21) for at least one solar collector (13, 23) bearing motorized means (M1) that selectively control the relative mobility of at least one photovoltaic module collector (25).

10. Solar energy collection panel, according to the preceding claim, **characterized by** the fact that such support plate (21) is shaped as an element for the covering of a rooftop or similar structure (21.4, 21.1, 21.2, 21.3) and is fastened to the scaffolding (0) of a cover of a building or similar structure and provides the complete covering for at least part of the same.

11. Solar energy collection panel, according to one or more of the preceding claims, **characterized by** the fact that said at least one photovoltaic module collector (15, 25) includes a support bench (15.1, 25.1) that selectively can be brought to totally or partially cover at least one corresponding solar collector (13, 23) in order to provide a protective shield.

12. Solar energy collection panel, according to one or more of the preceding claims, **characterized by** the fact that it includes rack and pinion type mechanical movement transmission means (15.2, 16.1, P11, 26) interposed between such motorized means (M, M1) and at least one mobile collector (15, 25) in order to control the relative mobility of the same.

13. Solar energy collection panel, according to one or more of the preceding claims, **characterized by** the fact that comprises - in a respective electric circuit - control electric/electronic means including a rain gauge, an anemometer, and a luminous intensity meter, so-called twilight sensor, which permit the exposure of the solar collector only under the optimum conditions of solar radiation, otherwise providing to the total or partial covering of the solar collector itself by the photovoltaic module collector.
